(19) Europäisches Patentamt
European Patent Office
Office européen des brevets

(11) **EP 4 296 053 B1**

(12) **EUROPEAN PATENT SPECIFICATION**

(45) Date of publication and mention
of the grant of the patent:
**12.02.2025  Bulletin 2025/07**

(21) Application number: **22180930.4**

(22) Date of filing: **24.06.2022**

(51) International Patent Classification (IPC):
***B32B 17/10*** *(2006.01)*

(52) Cooperative Patent Classification (CPC):
**B32B 17/10036; B32B 17/10247; B32B 17/10348;
B32B 17/10504; B32B 17/10513; B32B 17/10532;
B32B 17/10541; B32B 17/10697; B32B 17/10761;
B32B 17/10917**

(54) **LAMINATE WITH OBSCURATION AND LIQUID OPTICALLY CLEAR ADHESIVE**

LAMINAT MIT VERDUNKELUNG UND FLÜSSIGEM, OPTISCH KLAREM KLEBSTOFF

STRATIFIÉ AVEC OBSCURCISSEMENT ET ADHÉSIF LIQUIDE OPTIQUEMENT TRANSPARENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.12.2023  Bulletin 2023/52**

(73) Proprietor: **AGP Worldwide Operations GmbH
6300 Zug (CH)**

(72) Inventors:
• **RUEDA GUERRERO, Natalia
15081 Cercado de Lima, Lima (PE)**
• **SARMIENTO, Andrés
Canton, Michigan, 48188 (US)**
• **SALAZAR, Mauricio
15088 Cercado de Lima, Lima (PE)**
• **HERNÁNDEZ GALEANO, Jessica Carolina
Bogotá (CO)**

(74) Representative: **ABG Intellectual Property Law,
S.L.
Avenida de Burgos, 16D
Edificio Euromor
28036 Madrid (ES)**

(56) References cited:
**WO-A1-2020/254991     WO-A1-2022/009180
US-A1- 2016 075 111**

# Description

## Field of the Invention

The invention relates to the field of glazing and, more particularly, to vehicle glazing such as glazing for automobiles.

## Background of the Invention

With the trend towards full autonomous vehicles, as well as consumer demand for increased levels of comfort, convenience, and safety, the complexity of modern automotive glazing has been increasing at a rapid rate. Often times, the glazing is used as a platform or becomes an integral permanent part of the new technology. For instance, modern glazing systems may be equipped with various electrically controllable functional elements, such as sensors, detectors, or receiver units.

The glazing, which comprises a substantial portion of the vehicle interior and exterior surface area, makes the perfect platform for many of these technologies. The glazing also can provide an optically transparent protective cover for the devices as well as a high field of view for cameras and sensors.

As the plastic interlayer of a laminate is soft and pliable, laminated glazings in particular lend themselves well to many of the new technologies as it is possible to embed various inserts, materials and devices needed to implement additional functionality within the plastic layer of the glazing.

As a rule of thumb, a film, busbar, sensor, wire, lead, or other object can be laminated if the thickness is not more than 1/3 of the total thickness of the interlayer. The interlayer is soft at room temperature. During the lamination process, the interlayer is held at an elevated temperature under high pressure and if is thin enough will flow to accommodate the insert. The maximum insert thickness will depend upon other factors such as the other dimensions of the thickness of the glass, the strength of the glass, the specific interlayer and the duration, temperature, and pressure of the lamination cycle. If the object is too thick, the glass may break. Objectionable distortion can also occur. With all other factors remaining the same, a thinner insert is always better with respect to the risk of breakage and distortion.

Driver assistance systems are one example of the innovative technologies that the vehicle glazing has become an integral and essential part of.

Almost all of the vehicles being produced in North America include at least some minimal level of driver assistance as standard equipment. Many of the automotive manufacturers are now making driver assistance systems, which were an expensive option not too many years ago, standard equipment on several if not all of their models.

One major automotive manufacturer has been including their driver assist technology package that used to be a $3,000 option as standard equipment on most models. The system provides: adaptive cruise control, lane keep assist, sway warning, pre-collision braking, and throttle management. The system utilizes two cameras mounted near the rear-view mirror as well as other sensors mounted in other locations. To date they have delivered over one million vehicles with this technology.

However, the optical quality of windshields is based upon the requirements for human vision. While the human eye can today analyze an image far better than a computer, today's cameras have far greater resolution than the human eye and the algorithms that process these images are advancing at a rapid rate. The requirements for human vision are not the same as for a camera system. In general, for computer vision, the optical requirements are more like that of a precision lens system than a human eye. This may change in the future but for now and the foreseeable future, the optical quality of the windshield will need to be better than required for just human vision when used with camera systems.

The glazing in driver assist systems becomes a critical component of the optical path of the camera system. However, while the optical components of the camera itself are precision formed to micron level tolerances, the variation in the glazing is orders of magnitude greater.

There are a number of sources of variation present in glazing manufacturing process.

The typical variation in thickness alone for flat float glass is up to plus or minus 50 microns for each of the two glass layers. Some of the variation, which can occur over a short distance, is caused by variation in the rate at which the liquid glass is drawn from the refractory vessel onto the tin bath during the float process. This is known as draw line distortion.

Another substantial source of distortion comes from the black obscuration. Most laminated glazing will have a black obscuration printed on at least one of its surfaces. Often times, an obscuration is required on both glass layers. A black enamel frit is used. The frit is applied to the flat glass by means of screen print or inkjet in most cases.

Black enamel frit is comprised of pigments, carriers, binders, and finely ground glass. As the flat glass is heated during the bending process, the powdered glass in the frit softens and melts, fusing to the surface of the glass. The black print becomes a permanent part of the glass. The frit is said to be "fired" when this takes place. The areas with the black frit absorb more heat resulting in high thermal gradients which can result is a mismatch between the glass surfaces.

During the lamination process, the two glass layers are forced together and permanently bonded to each other. If the shape of the two surface are not a perfect match, there will be residual stress locked into the glazing. Residual stress, even at low levels, can result in optical issues.

Glass is a transparent isotropic substance, this means physical properties, such as the index of refraction, do not depend on its orientation. However, when you apply a mechanical stress to glass, it can become anisotropic, in the case of glass, the index of refraction will vary with stress. This phenomenon is known as mechanical birefringence, photo elasticity, or stress birefringence. The induced birefringence in glass is proportional to the stress applied.

When glass becomes birefringent, it will display two different indices of refraction that depend on polarization: one refraction index for an axis of polarization and another one for its perpendicular axis. For an incident non-polarized light in a birefringence material, half of the light will be affected by one refraction index and the other half by a different refraction index, producing an effect commonly known as "double image". This property is used to measure the residual stress in glass. This is the effect responsible for the pattern what we can sometimes see on tempered backlites, especially when the sun is low in the sky and polarized sunglass are worn.

Birefringence can be a problem when the laminate is used with camera-based driver assist system. Optical distortion from surface mismatch is amplified when the two surfaces are forced to conform to each other during the lamination process with a solid interlayer.

To minimize camera field of view distortion, the glass forming process must be tightly controlled with 100% inspection is often required.

Another example of a technology that is integrated with the glazing is Variable Light Transmission (VLT).

To control the level of light transmission through the laminate, there are many technologies available: electrochromic, photochromic, thermochromic and electric field sensitive films which are designed to be incorporated into laminated glass. Of interest are suspended particle device (SPD) films and polymer dispensed liquid crystal (PDLC) films which can quickly change their light transmittance in response to an electrical field.

SPD is a variable tint technology with which the level of tint can be controlled and varied in response to an applied electrical field. SPD goes from dark in the off state to less dark in the on state. In an SPD film, microscopic droplets of liquid containing needle like particles, light vales, are suspended in a matrix. In the off state the particles are in a random state of alignment and block the transmission of light. The degree of alignment and resulting tint can be varied in response to the applied voltage. The light transmittance in the on and off states can also be shifted through changes to the thickness and composition of the active material. In the off state, it is still possible to see clearly through SPD.

SPD glazing is produced by adding a special film to a laminate. The typical construction of the film is comprised of the active material sandwiched between two thin plastic layers having a transparent conductive coating on each. The film is laminated in between two plastic bonding interlayer layers to form a laminated glazing.

PDLC is a light scattering technology which goes from opaque in the off state to clear in the on state. In a PDLC film, microscopic droplets of liquid crystal are suspended in a polymer matrix. In the off state the liquid crystals are in a random state of alignment and scatter the light providing privacy. In the off state, the film is substantially opaque. When an electric field is applied, the crystals align and allow light to pass. The degree of scattering can be varied by varying the amplitude of the applied voltage. The level of light transmittance in the on and off states can also be shifted by making changes to the thickness and composition of the active material. PDLC is primarily a privacy product though it can also be used for solar control as it reduces the solar energy transmitted.

LC switchable film is very similar to PDLC in that it is based upon liquid crystal technology and is also supplied as a film comprising two ITO coated PET substrates with the liquid crystal inside. Unlike PDLC, the LC film is easily damaged by the vacuum, heat, and pressure of the lamination process.

Electrochromic switchable glazing undergoes a chemical reaction when a current is passed through the active material, in much the same way that a battery functions when it charges and discharges. The active material undergoes an oxidation or reduction reaction as the materials changes from light to dark and back.

SPD and PDLC however operate on a different principle. There is no chemical reaction. The molecules that make up the active material undergo a kinetic change in response to the presence of an electrical field. Therefore, the switching time of SPD and PDLC is orders of magnitude faster than electro-chromic glazing.

Laminates that incorporate these variable light transmittance technologies are sometimes referred to as "smart" glass or switchable.

In addition to the VLT films, a wide variety of other films are available that can be incorporated into a laminate. The uses for these films include but are not limited to solar control, increased stiffness, increased structural integrity, improved penetration resistance, improved occupant retention, providing a barrier, tint, providing a sunshade, color correction, and as a substrate for functional and aesthetic graphics. The term "film" shall include these as well as other products that may be developed or which are currently available which enhance the performance, function, aesthetics, or cost of a laminated glazing.

Most films do not have adhesive properties. To incorporate into a laminate, sheets of plastic interlayer are needed on each side of the film to bond the film to the other layers of the laminate.

Various electrical and electronic components are also incorporated into laminates including but not limited to antennas, defrosters for heating the glazing, lighting means such as LEDs and touch sensors.

Some components may require the addition of electrical conductors or bus bars to provide the electrical power needed by the component. With VLT films, we already are required to have two sheets of interlayer, so we have more thickness to work with. Applying the 1/3 rule of thumb, with an 0.76 and an 0.36 interlayer, we can have a thickness of up to 0.36 mm. As VLT films draw very little power, that is sufficient. The only area where we may have problems is where the connector that brings power into the laminate is attached, increasing the thickness.

Due to the thickness of the film with bus bars and connectors attached, it can be difficult to laminate even with two full thickness layers of interlayer. The edge of the film, if too far inboard from the edge of glass, acts as a fulcrum. The glass layers are compressed during the lamination and high stress levels at the edge of the film can result in breakage. One method to prevent breakage has been to insert a spacer running form the edge of the film to the edge of the glass. In this way, the abrupt change in thickness at the edge of the film is avoided.

With wire embedded heated bus bars, a substantial amount of current may be required. In this case, it is often necessary to "carve" a trough in the PVB for the thicker busbars.

LEDs, touch sensors, light fibers, sensors, and other devices can present a real challenge when working with plastic interlayer sheets due to their thickness and irregular shape.

In the event of an impact in the area of the insert, the laminate must still meet requirements for penetration resistance and spalling. As a result, it may be necessary to provide an additional sheet of interlayer so that the insert is captured between the two sheets. An adhesive may also be used to bond the insert to the glass with smaller inserts.

In addition to the lamination issues, we also find that some types of inserts are not able to survive the vacuum, pressure, and temperature of the standard autoclave lamination process.

Laminates with inserts share some common disadvantages.

The lamination process includes the steps of assembling the layers, removing air from the assembly, and then processing the assembly at an elevated temperature and pressure in an autoclave.

Prior to the autoclave step, it is necessary to remove as much air as possible from the assembly. There are two widely used methods used to remove the air from a laminate, the vacuum method, and the pinch roller method. In both processes, the laminate is heated so as to partially melt the interlayer causing it to adhere to the glass layers and seal the edges. The assembly is heated to a temperature that is high enough to make the interlayer tacky but not high enough to completely remove the embossing pattern in the plastic.

For most ordinary laminates, which do not have extreme curvature or inserts, the pinch roller system is used. The heated assembly is passed through a set of soft flexible rollers, curved to the average shape of the laminate which are used to pinch the two layers together adhering the glass layers to the tacky interlayer and forcing the air out.

In the vacuum method, vacuum is used to evacuate the air from the laminate and adhere the glass layers to the interlayer. The entire assembly is placed inside of a bag, or a channel is applied to the periphery. The assembly is heated with the vacuum applied and atmospheric pressure forces the assembly together. This method must be used for most laminates with inserts including performance films.

As one can imagine, the labor associated with the vacuum method is much higher. In general, workers are needed to apply and remove the channel or bag. The pinch roller method is largely automated.

Even when successfully laminated, the variations in thickness caused by the inserts can cause optical distortion and areas of tension and compression across the surface.

A common thread to all of these problems is the solid plastic interlayer. An alternative to solid interlayer is Liquid Optically Clear Adhesive (LOCA), sometimes called laminating resins. While LOCAs have been available for many years, they have primarily been used for non-glazing applications where the gap between the laminate layers is very irregular and or large.

Attempts have been made to use LOCAs in place of the solid interlayer. This process is known as cold lamination. Cold lamination eliminates the elevated temperature and pressure required by the conventional automotive glazing lamination process allowing for economical lamination of insert that otherwise would not be practical or even possible. It has also been found that surface mismatch distortion and residual stress is substantially reduced, and optical quality is increased when the glass layers are laminated with a LOCA rather than a solid interlayer.

It would be advantageous to fill the gap between the laminate layers with a viscous liquid that would conform to the gap between layers and to the contours of the various inserts that may be needed. With a liquid, the only restriction on inserts is that they can be no thicker that the design gap between the layers. The finished laminate would have none of the residual stress caused by the thickness of the insert or surface mismatch. In fact, it has been found that the optical quality of a laminate made with a LOCA is far better than that of the same glass made with an interlayer.

Moisture, heat, and light curable LOCAs are available. Unfortunately, none are practical for large scale series production of large automotive laminates such as windshields and panoramic roofs.

Moisture curable LOCA depends upon exposure to moisture in the atmosphere to cure. In an automotive laminate, the area exposed to the atmosphere is too small relative to the major face of the laminate to cure. The outer edges will cure rapidly but the areas further inboard may never cure.

Thermal curable LOCA can be used. However, it can take several hours at an elevated temperature to cure making it also impractical.

LOCA that may be cured with light, particularly ultraviolet (UV) light curable LOCA, is preferred due to its rapid cure. However, most glass laminates have a black obscuration that blocks penetration by UV light. Most of the advanced high technology laminated that would be candidates have a black obscuration on both the outer glass layer and the inner glass layer. The obscuration is required to hide the various inserts in the laminate from the exterior and the interior of the vehicle. The obscuration also serves to protect the polyurethane adhesive used to mount the glazing from external UV light exposure, such as in the sunlight. The obscuration on surface four, the interior facing side of the inner glass layer, gives the surface a rough texture enhancing the bond to the polyurethane adhesive.

While the LOCA in the clear portion of the laminate can be cured, there is no way to cure the LOCA where there is an obscuration on both sides of the laminate. While the UV light can be injected at the edge of glazing or from the clear portion of the surface the LOCA is not a good conductor of UV light. It may be possible to cure the UV LOCA on a laminate with a fairly narrow black obscuration (<20 mm) by these means, but with a near industry standard mounting flange width of ~20 mm, a minimum obscuration width is generally at least 35 mm. As the obscuration must hide the interior trim as well as the inserts, wider is more typical. Vehicles with a hidden wiper rest will often have an obscuration width of 150 mm, likewise, roof laminates also tend to have a wide obscuration of at least 100 mm.

It would be highly desirable to be able to laminate such parts where the LOCA is obscured on both sides with a light curable LOCA that could be rapidly cured. WO 2020/254991 A1 discloses a laminated glazing comprising at least two glass layers, at least one solid plastic interlayer disposed between two adjacent glass layers, and a light curable LOCA layer arranged between two adjacent glass layers.

WO 2022/009180 A1 discloses a laminated glazing wherein liquid adhesive can be used in addition to a PVB interlayer.

US 2016/075111 A1 discloses a laminated glazing with patterned obscuration bands.

**Brief Summary of the Invention**

The present invention provides a solution to the aforementioned problems by means of a laminated glazing according to claim 1, a method or assembling a laminated glazing according to claim 10, and a vehicle according to claim 15. The dependent claims define preferred embodiments of the invention.

In a first inventive aspect, the invention relates to a laminated glazing comprising:

a) at least two glass layers (201, 202, 203);

b) at least one solid plastic interlayer (4) disposed in at least a portion between two adjacent glass layers of the at least two glass layers;

c) at least one light curable LOCA layer (40) arranged in at least a portion between two adjacent glass layers of the at least two glass layers;

so that each two adjacent glass layers remain bonded either by means of the at least one light curable LOCA layer, by means of the at least one solid plastic interlayer, or by means of the combined use of the at least one light curable LOCA layer and the at least one solid plastic interlayer;

d) a first obscuration (6) provided over at least a portion of the outer or the inner glass layer (201, 202); and

e) a second obscuration (6) provided over at least a portion of the other outer or inner glass layer (201, 202),

    i) wherein at least a portion of the first and second obscurations overlap,

    ii) wherein at least one of said obscurations is patterned such as to provide voids (8) spaced to allow for the transmission of incoming light (16) into the at least one light curable LOCA layer (40), and

    iii) wherein the at least one patterned obscuration is provided over those portions of glass layer bonded to another glass layer by means of the at least one light curable LOCA layer.

The laminate of the present invention includes an obscuration that is pattered with small voids such that it will transmit sufficient incident light to quickly cure the LOCA while maintaining the aesthetics and protection of a solid, fully opaque, obscuration. Only one of two overlapping obscurations needs to be patterned or if both are patterned, preferably the voids are arranged such that they do not align. The LOCA is cured by means of light, such as UV light, injected into the glass surface through the voids in the obscuration. Cure time may be decreased by injecting a substantial portion of the light at an incident angle such that total internal reflection occurs.

Many of the drawbacks of producing laminates with advanced technology have been discussed in the background section. LOCA is beneficial in all of these applications which include but are not limited to: VLT glazing, heated glazing, glazing used with camera systems, glazing with embedded lighting, embedded antenna, touch sensors and other sensors as well as for integrating materials, or inserts, which cannot survive the heat and pressure of the standard lamination process.

In a second inventive aspect, the invention relates to a method for assembling a laminated glazing according to any of the embodiments of the first inventive aspect, comprising the following steps of:

a. providing a first obscuration (6) over at least a portion of a glass layer (201, 202);

b. disposing at least one solid plastic interlayer (4) over at least a portion of said glass layer provided with a first obscuration (6);

c. placing a non-adhesive interlayer on the surface of the at least one solid plastic interlayer, such as to form a pre-assembly;

d. laminating the pre-assembly with heat and/or pressure;

e. providing a second obscuration (6) over at least a portion of another glass layer (201, 202);

f. arranging at least one light curable LOCA layer (40) in at least a portion between the laminated pre-assembly and the glass layer provided with a second obscuration (6);

    i. wherein at least a portion of the first and second obscurations overlap;

    ii. wherein at least the second obscuration is patterned such as to provide voids (8) spaced to allow for the transmission of incoming light (16) into the at least one light curable LOCA layer (40); and

    iii. wherein the at least one patterned obscuration is provided over those portions of glass layer bonded to another glass layer by means of the at least one light curable LOCA layer;

g. Curing by light the product resulting from the previous step, by injecting light on the glass surface that has the second obscuration.

In a third inventive aspect, the invention relates to a vehicle comprising a laminated glazing according to any of the embodiments of the first inventive aspect and a camera wherein the at least one light curable LOCA layer of the glazing is located in the field of view region of the camera and said LOCA layer is immediately adjacent to a portion of the patterned obscuration.

Advantages of the present invention include:

- Optical quality is substantially improved.
- Allows for the use of thicker inserts than possible with interlayers.
- Allows for the use of inserts with irregular shapes.
- Allows for the use of inserts with non-uniform thickness.
- Allows for the use of inserts that are heat, pressure, or vacuum sensitive.

All the features described in this specification (including the claims, description and drawings) can be combined in any combination, with the exception of combinations of such mutually exclusive features.

**Brief Description of the Several Views of the Drawings**

To better understand the invention, its objects and advantages, the following figures are attached to the specification in which the following is depicted:

Figure 1A shows a cross section of a typical laminated automotive glazing.

Figure 1B shows a cross section of a typical laminated automotive glazing with performance film and coating.

Figure 2A shows a 50 mm x 150 mm 90% coverage pattern of an obscuration with filled squares according to embodiments the present invention.

Figure 2B is a detailed view of Figure 2A: 10 mm x 10 mm.

Figure 3A shows a 50 mm x 150 mm 90% coverage pattern of an obscuration with filled circles according to embodiments the present invention.

Figure 3B is a detailed view of Figure 3A: 10 mm x 10 mm.

Figure 4A shows a 50 mm x 150 mm 90% coverage pattern of an obscuration with void squares according to embodiments the present invention.

Figure 4B is a detailed view of Figure 4A: 10 mm x 10 mm.

Figure 5A shows a 50 mm x 150 mm 90% coverage pattern of an obscuration with void circles according to embodiments the present invention.

Figure 5B is a detailed view of Figure 5A: 10 mm x 10 mm.

Figure 6A shows a 50 mm x 150 mm 90% coverage pattern of an obscuration with filled hexagons and diamonds according to embodiments the present invention.

Figure 6B is a detailed view of Figure 6A: 10 mm x 10 mm.

Figure 7A shows a leather look obscuration obtained by ink jet printing according to embodiments the present invention.

Figure 7B shows a carbon fiber obscuration obtained by ink jet printing according to embodiments the present invention.

Figure 8 shows a cross section of VLT laminate with LOCA according to example 1 of the present invention.

Figure 9 shows a cross section of a laminate with a heat and pressure sensitive VLT film laminate by means of a third glass layer and LOCA according to example 2 of the present invention.

Figure 10 shows a path of light through the obscuration of Figure 9.

Figure 11 shows a cross section of a laminate with a UV, heat and pressure sensitive VLT film laminate by means of a PVB interlayer and LOCA according to one embodiment of the present invention.

Reference Numerals of Drawings

| | |
|---|---|
| 2 | Glass. |
| 4 | Plastic Interlayer (other than LOCA). |
| 6 | Obscuration/Black Paint. |
| 8 | Void in paint. |
| 12 | Infrared reflecting film. |
| 16 | Light. |
| 18 | Infrared reflecting coating. |
| 40 | Liquid Optically Clear Adhesive (LOCA). |
| 50 | ITO coated PET film. |
| 60 | Emulsion. |
| 70 | Bus bar. |
| 74 | Edge seal of the glazing. |
| 76 | Edge seal of the LC cell. |
| 80 | Tape. |
| 101 | Exterior side of glass layer 1 (201), number one surface. |
| 102 | Interior side of glass layer 1 (201), number two surface. |
| 103 | Exterior side of glass layer 2 (202), number three surface. |
| 104 | Interior side of glass layer 2 (202), number four surface. |
| 105 | Exterior side of glass layer 3 (203), number five surface. |
| 106 | Interior side of glass layer 3 (203), number six surface. |
| 201 | Outer glass layer. |
| 202 | Inner glass layer. |
| 203 | Third (intermediate) glass layer. |

**Detailed Description of the Invention**

The present disclosure can be understood more readily by reference to the detailed descriptions, drawings, examples, and claims in this disclosure. However, it is to be understood that this disclosure is not limited to the specific compositions, articles, devices, and methods disclosed unless otherwise specified and as such can vary. It is also to be understood that the terminology used herein is for the purpose of describing aspects only and is not intended to be limiting.

The structure of the invention is described in terms of the layers comprised in the glazing. The meaning of "layer", as used in this context, shall include the common definition of the word: a sheet, quantity, or thickness, of material, typically of some homogeneous substance and one of several.

A layer may further be comprised of non-homogeneous substances and also comprise multiple layers. When multiple layers together provide a common function, as in the case of a VLT film layer which is comprised itself of multiple layers, the multiple layers may be referred to as a layer. Further, layers may be continuous (i.e. provided across the entire laminated glazing) or discontinuous (i.e. positioned in one or more portions of the laminated glazing).

When multiple layers that vary widely in thickness are illustrated, it is not always possible to show the layer thicknesses to scale without losing clarity. Unless otherwise stated in the description, all figures are to be considered as for illustrative purposes and are not drawn to scale and thus shall not be construed as a limitation.

While the focus of the embodiments and disclosure is a laminated glazing intended for vehicles and more particularly for automobiles (automotive laminates) such as cars, said laminates may have utility in any other types of laminated glazing applications including but not limited to architectural, aerospace, solar panels, naval, rail, transit, military, and others.

In an embodiment, the laminate of the invention is suitable for vehicles including, but not being limited to, road vehicles (e.g. cars, busses, trucks, agricultural and construction vehicles, motorbikes), railway vehicles (e.g. locomotives, coaches), aircraft (e.g. airplanes, helicopters), boats, ships and the like. For instance, the vehicle may be a road vehicle and more particularly a car.

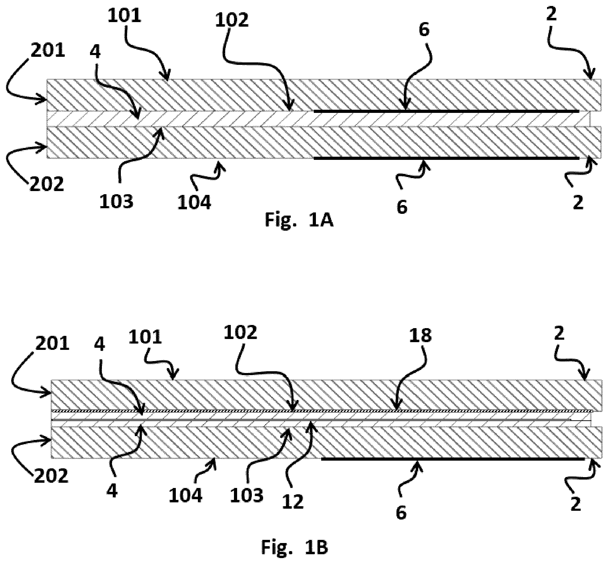

Typical automotive laminated glazing cross sections are illustrated in Figures 1A and 1B. A laminate is comprised of at least two layers of glass 2, the exterior or outer glass layer 201 and interior or inner glass layer 202 that are permanently bonded together by a solid plastic layer 4 (interlayer). In a laminate, the glass surface that is on the exterior of the vehicle is referred to as surface one, 101, or the number one surface. The opposite face of the exterior glass layer 201 is surface two, 102, or the number two surface. The glass 2 surface that is on the interior of the vehicle is referred to as surface four, 104, or the number four surface. The opposite face of the interior layer of glass 202 is surface three, 103, or the number three surface. Surfaces two 102 and three 103 are bonded together by the solid plastic layer 4.

An obscuration 6 may be also applied to the glass, typically to its periphery. Obscurations are commonly comprised of black enamel frit printed on either the number two, 102, or number four surface 104 or on both.

The portion of the glazing that is not obscured is called the daylight opening.

The laminate may have a coating 18 on surface two, 102, or three, 103. The laminate may also comprise a film 12 laminated between at least two plastic layers 4.

The following terminology is used to describe the laminated glazing of the invention.

The term "glass" can be applied to many inorganic materials, include many that are not transparent. For this document we will only be referring to transparent glass. From a scientific standpoint, glass is defined as a state of matter comprising a non-crystalline amorphous solid that lacks the ordered molecular structure of true solids. Glasses have the mechanical rigidity of crystals with the random structure of liquids.

Glass is formed by mixing various substances together and then heating to a temperature where they melt and fully dissolve in each other, forming a miscible homogeneous fluid.

The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. The glass layers may be comprised of heat absorbing glass compositions as well as infrared reflecting and other types of coatings.

A glazing is an article comprised of at least one layer of a transparent material which serves to provide for the transmission of light and/or to provide for viewing of the side opposite the viewer and which is mounted in an opening in a building, vehicle, wall or roof or other framing member or enclosure. The glazing of the present invention is primarily intended for vehicles and more particularly for automobiles (automotive glazing) such as cars.

Laminates, in general, are articles comprised of multiple layers of thin, relative to their length and width, material, with each thin layer having two oppositely disposed major faces, typically of relatively uniform thickness, which are permanently bonded to one and other across at least one major face of each layer. The layers of a laminate may alternately be described as sheets or plies. In addition, the glass layers of a glazing may be referred to as panes.

Safety glass is glass that conforms to all applicable industry and government regulatory safety requirements for the application.

Laminated safety glass is made by bonding two or more layers of annealed glass together using a plastic bonding layer comprised of a thin sheet of transparent thermoplastic (interlayer).

In an embodiment, the laminated glazing of the present invention comprises two glass layers (201, 202). In another embodiment, the laminated glazing of the present invention comprises three glass layers (201, 202, 203). Also contemplated are laminates comprising four or more glass layers. For instance, in bulletproof glasses, the more layers there are, the more protection the glass offers.

Annealed glass is glass that has been slowly cooled from the bending temperature down through the glass transition range. This process relieves any stress left in the glass from the bending process. Annealed glass breaks into large shards with sharp edges. When laminated glass breaks, the shards of broken glass are held together, much like the pieces of a jigsaw puzzle, by the plastic layer helping to maintain the structural integrity of the glass. A vehicle with a broken windshield can still be operated. The plastic layer also helps to prevent penetration by objects striking the laminate from the exterior and in the event of a crash occupant retention is improved.

All windshields are required by law to be annealed, laminated, safety glass. All of the other glazed positions typically are made of tempered glass although laminated glass can be used in any position.

The plastic bonding layer (interlayer) has the primary function of bonding the major faces of adjacent layers to each other. The material selected is typically a clear thermoplastic. The plastic interlayer used to laminate all safety glass windshields is index matched to the index of refraction of the glass to prevent internal reflections.

For automotive use, the most commonly used bonding layer (interlayer) is polyvinyl butyral (PVB). PVB has excellent adhesion to glass and is optically clear once laminated. It is produced by the reaction between polyvinyl alcohol and n-butyraldehyde. However, PVB by itself, is too brittle. Plasticizers must be added to make the material flexible and to give it the ability to dissipate energy over the wide temperature range required of an automotive laminated glazing. Only a small number of plasticizers can be used. They are typically linear dicarboxylic esters. Two in common use are di-n-hexyl adipate and tetraethylene glycol di-n-heptanoate. A typical automotive PVB interlayer is comprised of 30-40% plasticizer by weight.

In addition to PVB, ionoplast polymers, ethylene vinyl acetate (EVA), thermoplastic polyurethane (TPU), and liquid optically clear adhesive (LOCA) can also be used as bonding layer.

Typical automotive solid interlayers are made by an extrusion process. To facilitate the handling of the plastic sheet during assembly the surfaces of the interlayer are normally embossed as a smooth surface tends to stick to the glass making it difficult to position on the glass and trapping air. Standard thicknesses for automotive PVB interlayer are 0.38 mm and 0.76 mm (15 and 30 mil).

In the glazing of the present invention, at least one light curable LOCA layer (40) is injected in at least a portion between two of the at least two glass layers in order to bond said two glass layers. Due to its liquid nature, the LOCA is able to fill well the gap between the glass layers and accommodate inserts or parts of inserts such as electrical or electronic components like bus bars in order to confer additional functionalities to the glazing. Thus, the provided laminated glazing preferably comprises at least one insert which is bonded to the laminate by the at least one light curable LOCA layer. For instance, the insert comprises at least one of the following: a VLT film selected from the group of PDLC film, SPD film, LC film, electrochromic film, or a lighting means, a touch sensor, a defroster for glazing heating and embedded antenna.

According to the present invention, two consecutive or adjacent glass layers may be bonded either by means of a light curable LOCA layer, by means of one or more solid plastic interlayers, or by means of the combined use of a light curable LOCA layer and one or more solid plastic interlayers. The combined use of a light curable LOCA layer and one or more solid plastic interlayers may comprise that the light curable LOCA layer and the one or more solid plastic interlayers substantially fully overlap (e.g. across substantially the whole area of the two glass layers), partially overlap or do not overlap (that is, the two adjacent glass layers are bonded in at least a portion by means of a light curable LOCA layer and in at least a different portion by means of one or more solid plastic interlayers (e.g. PVB)).

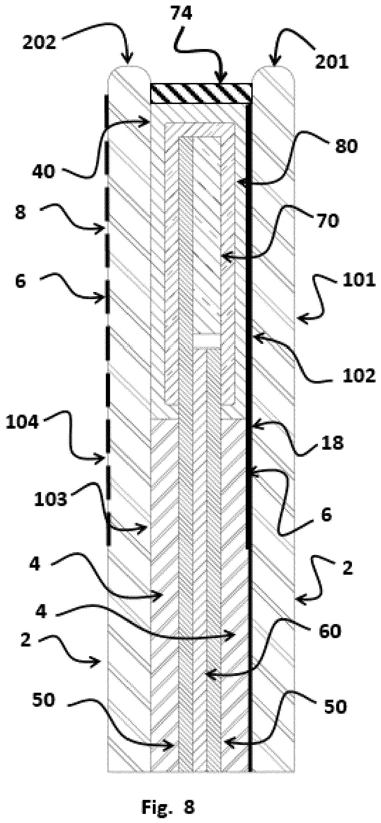

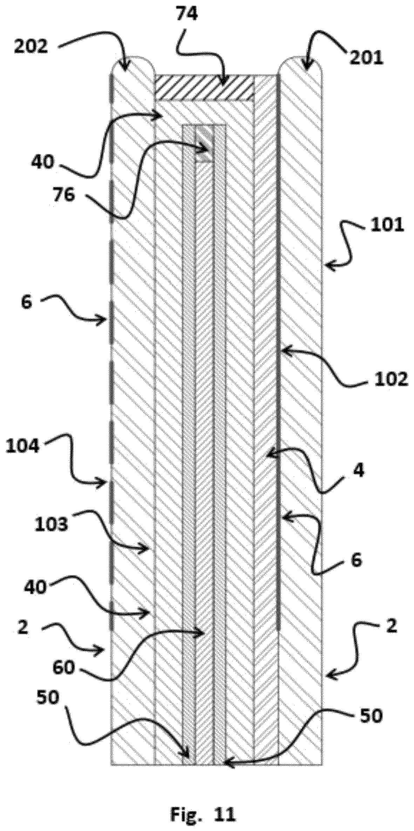

In an embodiment, the laminated glazing comprises two glass layers bonded by means of the combined use of a light curable LOCA layer and one or more solid plastic interlayers, wherein said light curable LOCA layer and said one or more solid plastic interlayers substantially fully overlap (see for instance, embodiment of Fig. 11), partially overlap or do not overlap (see for instance, embodiment of example 1 and Fig. 8).

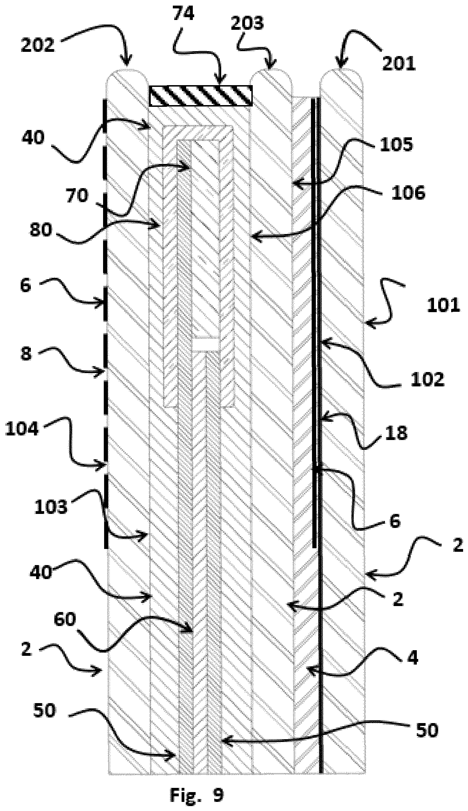

In an embodiment, the laminated glazing comprises three glass layers, wherein two adjacent glass layers are bonded by means of a light curable LOCA layer and the other two adjacent glass layers are bonded by means of one or more solid plastic interlayers. In a more particular embodiment, the inner and the intermediate glass layers are bonded by means of a light curable LOCA layer whereas the outer and the intermediate glass layers are bonded by means of one or more solid plastic interlayers (see for instance, embodiment of example 2 and Fig. 9).

The glazing of the present invention also comprises a first and a second obscuration (6). In an embodiment, the first and the second obscurations are provided around the periphery of the glazing. In another embodiment, the first and the second obscurations are provided along the periphery and in an internal area of the glazing (e.g. in windshields internal obscurations in an area near the top center may be suitable for hiding the mounting bracket for a camera system). We note that while black frit obscurations are discussed, black is used only because black has historically been the only color available that could meet all of the stringent automotive requirements. Thus, the color black is not to be construed as a limitation.

Likewise, any convenient process can be used to create the obscuration. Screen printing and inkjet printing are used in many of the embodiments and examples as they are the most commonly used but it should be understood that the printing means should not be considered as a limitation.

The obscuration may be printed on the glass or the interlayer. The obscuration may also be printed to a thin opaque layer (e.g. PET layer) bonded to the glass or the interlayer.

A marking means, such as a LASER marking system, may also be used to produce the patterning of the obscuration of the invention. The black ink or frit, being highly absorbent of light, can be easily ablated by a LASER. Voids with a minimum dimension of as little as about 30 microns are possible. LASER patterning can be done after the glass has been bent.

The most common LOCAs are thermoset polymers that are cured by means of exposure to UV light. However, these LOCAs can generally cure with ordinary white light. It should be noted that other LOCAs may be available that are cured at other wavelengths. Therefore, UV curable LOCA is not a limitation but any light curable LOCA is contemplated in the present invention. However, for simplicity, the LOCA layer is referred herein to as light curable LOCA in several instances.

The light curable LOCA may be selected for instance from the group consisting of silicone, epoxy, acrylic, and acrylate urethane.

The invention takes advantage of one of the optical properties of the glass to expose the LOCA to light energy sufficient to cure the LOCA with even a very low percentage of surface area voids in the one or more patterned obscurations.

The refraction index (RI) of a material is defined as the ratio of the velocity of light (c) in a vacuum to the velocity (v) in the material.

When light travels from a media with a higher refractive index to one with a lower refractive index, the light will refract and exit the denser media if the angle of the beam relative to the surface normal is less than the critical angle. If the angle of incidence is equal to or greater than the critical angle, Total Internal Reflection, TIR, occurs.

The critical angle is the smallest angle of incidence of light travelling in one medium and reaching the interface of an adjacent medium that is optically different (has a different index of refraction) where light suffers total internal reflection, TIR. Any light incident to the interface at a smaller angle than the critical angle will normally refract to the adjacent medium.

If $n_3$ is the refractive index of the glazing and $n_2$ is the refractive index of the adjacent medium in direct contact with it such as in surface one 101 or surface four 104, then the critical angle $\theta_c$ is calculated by:

$$\theta_c = \arcsin \frac{n_2}{n_3}$$

Using refractive index values of 1 for air, 1.53 for glass we have:

$$\theta_{glass/air} = 40.81°$$

By carefully designing the shape and spacing of the voids in the black paint on the glass, we can deliver sufficient energy to the LOCA to completely cure it through the thickness of the glass injecting light from just one major face of the laminate. With multiple light sources, preferably at least a portion of the light will be incident at or above the critical angle allowing for total internal reflection to occur delivering energy to points not in the direct line of sight and even hidden. In this manner, the light injected into the surface of the glass through the small openings in the obscuration will propagate across a much larger area than that of the opening. This is especially advantageous when used with LOCAs that only need a certain amount of UV (or other wavelengths) to trigger a chain reaction that will polymerize all of the reaming LOCA.

Thus, cure time may be decreased by injecting a substantial portion of the light at an incident angle such that total internal reflection occurs. In an embodiment, 90% or more of the light energy used to cure the LOCA is injected at or above the glass/air critical angle.

According to the present invention, the laminated glazing comprises a first obscuration (6) provided over at least a portion of one of the outer (or the inner) glass layer and a second obscuration (6) provided over at least a portion of the inner (or the outer) glass layer,

i) wherein at least a portion of the first and second obscurations overlap,
ii) wherein at least one of said obscurations is patterned such as to provide voids (8) spaced to allow for the transmission of incident light (16) into the at least one light curable LOCA layer (40), and
iii) wherein the at least one patterned obscuration is provided over those portions of glass layer bonded to another glass layer by means of the at least one light curable LOCA layer.

In an embodiment, only one of said obscurations is patterned whereas the other one is a traditional obscuration (solid, opaque). In a more particular embodiment, a solid, opaque obscuration is over at least a portion of surface two, 102 of the outer glass layer and a pattern obscuration is over at least a portion of surface three, 103 or surface four, 104, of the inner glass layer 202. In an even more particular embodiment, a solid, opaque obscuration is over at least a portion of surface two, 102 of the outer glass layer and a pattern obscuration is over at least a portion of surface four, 104, of the inner glass layer 202.

In preferred embodiments of the disclosure, a solid, opaque, obscuration 6 is applied to surface two, 102 of the outer glass layer 201. The embodiments have at least two (e.g. two or three) glass layers, with a second obscuration printed on surface four, 104, of the inner glass layer 202. The inner glass layer obscuration is patterned to allow for UV light or another appropriate light to be transmitted into the laminate. In these embodiments, the at least one light curable LOCA layer 40 is preferably arranged in at least a portion between the outer glass layer 201 and the inner glass layer 202 or between the intermediate glass layer 203 and the inner glass layer 202.

The patterning of the present disclosure allows for sufficient UV light to be transmitted to cure the LOCA in a reasonable amount of time. At the same time, the patterning maintains an aesthetic comparable or better than that of a solid obscuration.

In these preferred embodiments, the solid obscuration 6 of the prior art as shown in Figure 8 is retained unchanged on surface two, 102, of the outer glass layer 201 and will prevent sunlight and UV light from passing through and becoming visible from the interior of the vehicle. This obscuration on surface two, 102, will also protect the polyurethane adhesive used to bond the glazing to the flange of the vehicle opening from the degradation that can occur with long-term exposure to the UV range of the sunlight. This has been the primary function of the obscuration applied on surface two, 102. Additionally, it also intends to hide the interior trim, and anything mounted to the inside of the glazing from view from the exterior of the vehicle.

The second obscuration 6 on surface four, 104, is used to hide portions of the laminate from the interior. This would include the edge of any performance film or coating, bus bars on heated glazing and any other object that may be inserted that it is not desired to be visible.

The surface four obscuration is modified by the introductions of voids (8) i.e., regions without paint, in the opaque black paint (6). Coverage is the percentage of the surface in the patterned area that remains opaque.

For aesthetics, the smaller the void in the print of the pattern, the less noticeable it will be. For a screen print it is difficult to print at less than 0.5 mm. Although most of the examples of the figures in general have voids 8 with a minimum dimension of 0.5 mm, it should be noted that if an ink-jet process is used, the resolution is much better and even smaller voids may be produced. In fact, with an ink-jet process, it is possible to print an obscuration with a graphic pattern that enhances or complements the interior of the vehicle.

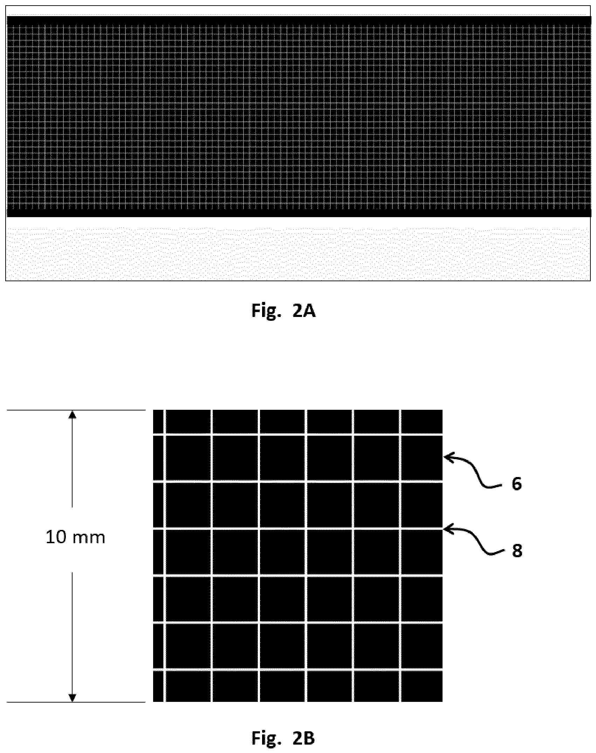

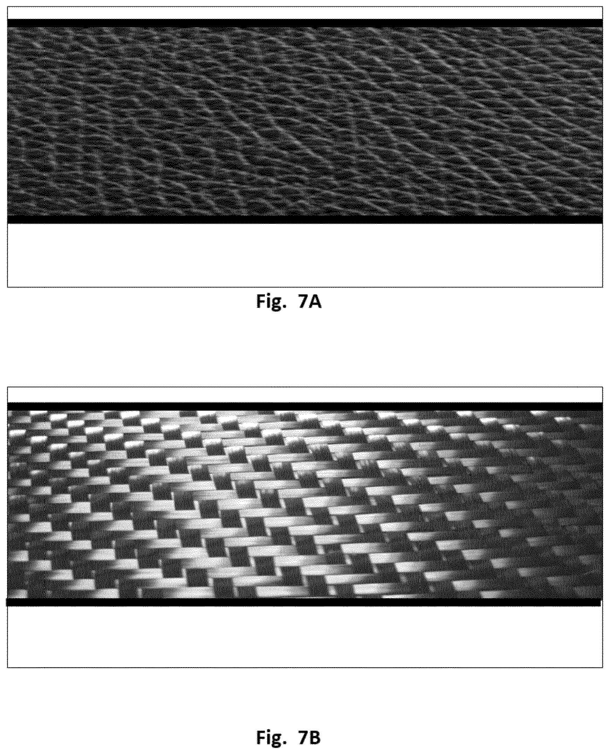

Examples include leather look and carbon fiber look as shown in Figures 7A and 7B. Rather than the circles, hexagons, and rectangles, as shown in Figures 2, 3, 4, 5, and 6, any shape or pattern may be used including text, symbols, trademarks and logos. The percent of the surface that the voids occupy are a function of how quickly the part needs to be cured and the aesthetic desired. Typically, as little as about 1% of the obscuration region surface may be occupied by voids and as much as about 25% or even about 50% may be possible. Obviously the 1% obscuration will take 25 times as long to cure as the 25% which will take four times as long as the clear daylight opening. However, some inserts may be more difficult to hide requiring more coverage by the obscuration.

In the case where an insert is still visible from the interior, different approaches to solve this issue can be used. For instance, the pattern can be altered making it denser as needed, or the insert can be colored matched to the obscuration to make it less visible.

In an embodiment, the area of the voids in the at least one patterned obscuration is less than or equal to about 50%, preferably less than or equal to about 25%, or preferably less than or equal to about 10%, or preferably less than or equal to about 5%.

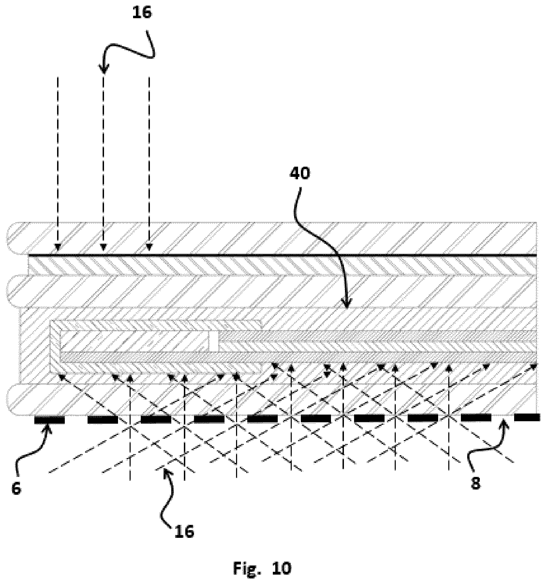

The spacing of the voids is also important. While collimated light can be used, there is no benefit and in fact it would be disadvantageous. A non-collimated light source is far less expensive and will produce light that will fan out once it passes through the voids in the obscurations. The light will enter the void and then reflect and refract curing the LOCA that is not in the direct line of sight. To improve upon and reduce the cure time, the laminate or the light source can be moved so as to inject light at various angles. This can be done by several methods, for instance, by using a robot to present the glazing to the light source. A stationary light source can be built that projects the light at multiple angles as well. The concept is illustrated in the embodiment of Figure 10 where rays of light 16 enter at various angles. If the incident is at or above the critical angle, total internal reflection occurs. When this occurs, the light is reflected by the internal surfaces of the laminate at the glass/LOCA interfaces. This is also beneficial to curing as the light is better distributed and reaches areas that are not in the direct line of sight. As the LOCA tends to absorb the light energy, this is only effective over a short distance which is another reason to use very small voids that are close to each other.

In general, the spacing of the voids should be less than the thickness of the glass layer plus the LOCA layer that the light is being projected through. Depending upon a number of factors including but not limited to the light intensity, the light angle of incidence, whether the glass and light are stationary or not, it is typically possible to increase the spacing by a factor ranging from 1 to 4 times the thickness of the substrate (glass layer wherein the patterned obscuration is provided) and LOCA.

Thus, the center to center spacing of the voids is preferably equal to or less than about four times the thickness of the substrate plus the LOCA, more preferably equal to or less than about double the thickness of the substrate plus the LOCA and ideally less than or equal to about the thickness of the substrate plus the LOCA. Greater spacing is possible but will result in a trade-offs in terms of the cure time and the complexity of the process. Theoretically, we could mount a fiber optic on a 5-axis robot and inject the light at a large number of angles improving coverage, however, this may not be a practical or economic approach.

Depending upon the visibility of the insert and the desired aesthetic, the quantity of light that the void in the black print allows to pass as a percentage of the total incident light will normally range from 1% and 50% or from 1% and 25% of the incident light in the desired wavelength range required to cure the LOCA.

At the lower light transmission levels, it is possible to increase the intensity of the light to compensate and retain a short cure time. The cure time is directly proportional to the energy applied. With a 10% void pattern (i.e. 90% coverage pattern), the clear areas of the daylight opening where none of the light is blocked will cure ten times as fast as the LOCA in the obscuration areas as they are receiving ten times the energy. The intensity of the light may need to be modulated in the clear areas to prevent over exposure in the clear areas. The overexposed areas may become overheated which will damage the LOCA, and the high level of UV light can cause the LOCA to degrade if applied at a substantially greater intensity or duration than needed to cure.

One means to achieve uniform curing and prevent overexposure is to apply a partially transparent mask covering the areas that do not have a patterned obscuration. The light transmission of the mask should be in the range of the patterned obscuration. As an example, a glazing with an obscuration patterned with 90% black coverage which to transmits 10% of the applied light has the daylight opening covered with a film that also transmits just 10% of the applied light. In this manner, the cure rate and time is balanced and the LOCA in the area where the glass is clear is not over exposed.

One embodiment of this invention, depicted in Figure 11, is a vehicle laminated glazing such as a sunroof, panoramic roof, or panoramic windshield comprising at least two glass layers, an outer glass layer 201 having two major surfaces named surface one, 101, and surface two, 102; and an inner glass layer 202 having two major surfaces named surface three, 103, and surface four, 104. A black obscuration 6 is printed by means of inkjet printing or screen printing, onto surface two, 102, of the outer glass layer 201. A PVB interlayer sheet 4 is disposed in contact with surface number two, 102. The PVB interlayer 4 could be a conventional PVB as well as a specific UV protection PVB interlayer that has less than 1% light transmission in the range of 380 nm and 420 nm. The PVB interlayer serves as UV protect against long term UV exposure of the VLT film. A VLT film, such as liquid crystal cell is comprised of a liquid crystal emulsion 60 sandwiched between two substrates coated with an electrically conductive coating 50. For liquid crystal cells, an edge seal 76 is used to seal the cell. The liquid crystal cell is laminated between the PVB interlayer 4 and the inner glass layer 202 by means of using a LOCA 40. An edge seal 74 is applied along the periphery of the laminate which serves as a dam to contain the LOCA during fill and curing. An obscuration 6 with less than 100% coverage, such as a patterned obscuration represented in any of the Figures 2A, 2B, 3A, 3B, 4A, 4B, 5A, 5B, 6A, 6B, 7A and 7B is printed either on surface three, 103, or surface four, 104. The LOCA 40 is cured by UV light shone through surface four, 104, of the glazing as illustrated in Figure 10. The UV light passes through the voids of the obscuration and activates polymerization of the LOCA underneath.

Also provided is a method for assembling a laminated glazing according to the present invention, comprising:

a. providing a first obscuration (6) over at least a portion of a glass layer (201, 202);
b. disposing at least one solid plastic interlayer (4) over at least a portion of said glass layer provided with a first obscuration (6);
c. placing a non-adhesive interlayer on the surface of the at least one solid plastic interlayer, such as to form a pre-assembly;
d. laminating the pre-assembly with heat and/or pressure;
e. providing a second obscuration (6) over at least a portion of another glass layer (201, 202);
f. arranging at least one light curable LOCA layer (40) in at least a portion between the laminated pre-assembly and the glass layer provided with a second obscuration (6);

i. wherein at least a portion of the first and second obscurations overlap;
ii. wherein at least the second obscuration is patterned such as to provide voids (8) spaced to allow for the transmission of incoming light (16) into the at least one light curable LOCA layer (40); and
iii. wherein the at least one patterned obscuration is provided over those portions of glass layer bonded to another glass layer by means of the at least one light curable LOCA layer;

g. Curing by light the product resulting from the previous step, by injecting light on the glass surface that has the second obscuration.

The non-adhesive interlayer may or may not be part of the final laminated glazing. In a particular embodiment, the non-adhesive interlayer is a sacrificial layer that is removed after the lamination step d).

The skilled person knows that numerical values relating to measurements are subject to measurement errors which place limits on their accuracy. Where terms such as "about" or "approximately" are applied to a particular value (e.g. "about 200 °C" or "approximately 200 °C") or to a range (e.g. "about x to approximately y"), the value or range is interpreted as being as accurate as the method used to measure it. Unless explicitly stated otherwise, the general convention in the scientific and technical literature may be applied so that the last digit of numerical values preferably indicates the precision of measurement. Thus, unless other error margins are given, the maximum margin is preferably ascertained by applying the rounding-off convention to the last decimal place. For instance, a value of 3.5 preferably has an error margin of 3.45 to 3.54 and a range of 2% to 10% preferably covers a range of 1.5% to 10.4%. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or subranges encompassed within that range as if each numerical value and sub-range is explicitly recited. As an illustration, a numerical range of "about 1 % to about 5 %" should be interpreted to include not only the explicitly recited values of about 1 % to about 5 %, but also include individual values and sub-ranges within the indicated range. Thus, included in this numerical range are individual values such as 2, 3. and 4 and sub-ranges such as from 1-3, from 2-4, and from 3-5, etc. This same principle applies to ranges reciting only one numerical value.

Examples

**1. Example one:**

The following description corresponds to the example illustrated in Figure 8. This example consists of a laminated roof of approximately 1200 mm x 800 mm comprising two glass layers 2. The outer glass layer 201 is 2.8 mm clear soda-lime glass. A black frit 6 is screen printed on number two surface 102 and fired. A solar coating 18 (infrared reflecting coating) is then applied to number two surface 102 of the outer glass layer 201 by a Magnetron Sputtering Vapor Deposition (MSVD) process. The inner glass layer 202 is printed on number four surface 104 with black paint 6 with a 90% coverage pattern (i.e. 10% of voids 8) as shown in Figure 2A and the detailed Figure 2B. The solid rectangles measure 1.5 mm on each side and are spaced apart by 100 microns. This pattern is produced by inject printing or a solid black obscuration and then LASER ablating the lines (voids).

Two PVB adhesive bonding layers 4 of 0.76 mm are used to sandwich a sheet of variable light transmission (VLT) film. The film is made by injecting an emulsion 60 containing the active material (SPD or PDLC) between two sheets of 120 µm thick Indium Tin Oxide (ITO) coated PET transparent film 50. Along the opposite left and right side of the film, one side of each of the ITO coated PET film 50 layers is cut back by 15 mm and the emulsion 60 is removed exposing the ITO. A 70 µm x 6 mm wide copper bus bar 70 is applied directly to the exposed ITO and a layer of black polyamide tape 80, with a thickness of 50 µm, is wrapped around the edge of the film sealing it. The PVB layer 4 is cutback by 30 mm exposing the section of the film with the bus bars and the edge of film on the non-bus bar portions of the periphery. An edge seal 74 is applied along the periphery of the glazing which serves as a dam to contain the LOCA. The gap between the PVB 4 and the edge seal 74 is filled with a UV curable LOCA 40. The area of the glazing not covered by the obscuration, the daylight opening, is covered by a mask having 10% light transmission in the wavelength range of the curing light source to prevent overexposure of the LOCA. The assembly is exposed to UV light from a lighting assembly which is moved relative to the assembly such as to inject a substantial portion of the light at an angle equal or above the critical angle of the glass/air interface resulting in total internal reflection. Alternately, the assembly can be moved and the lighting assembly remain stationary or both the lighting and glazing can be moved relative to each other to facilitate the distribution of light energy within the LOCA.

**2. Example two:**

This example is illustrated in Figure 9 and is similar to example one but with a laminate with three glass layers, the outer and the intermediate glass layer being bonded by a solid plastic layer and the intermediate and the inner glass layer being bonded by a light curable LOCA that extends substantially across the entire area of the glazing.

In this example, a VLT film is used that is sensitive to heat and pressure and thus cannot be processed in an autoclave. A laminate with two glass layers, one outer glass layer 201 provided with a black frit 6 printed on number two surface 102 and one intermediate glass layer 203, along with a PVB adhesive bonding layer 4 is first produced and laminated in an autoclave. The laminate is then laminated to an inner glass layer 202 by means of a UV curable LOCA 40. The VLT film is sandwiched between the initial laminate and the inner glass layer, the latter being printed on number four surface 104 with black paint 6 with a 90% coverage pattern (i.e. 10% of voids 8) as shown in Figure 2A and the detailed Figure 2B.

**3. Example three:**

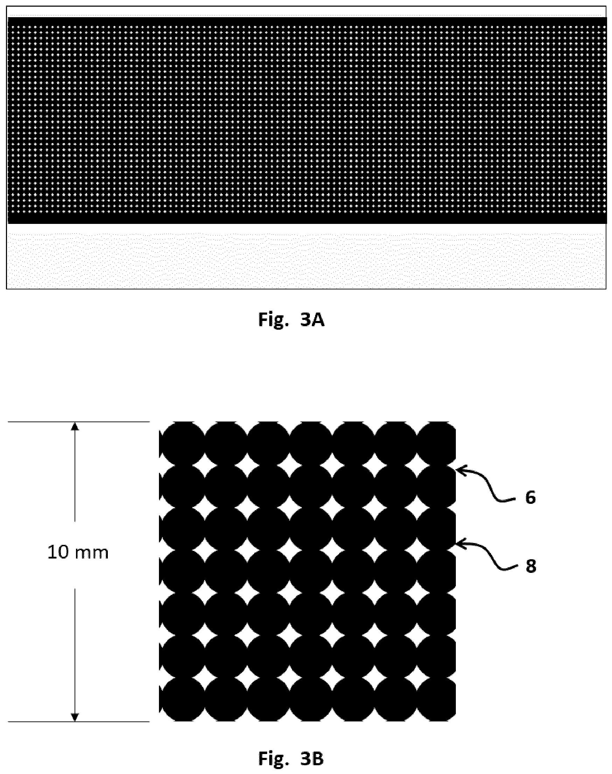

This example is identical to example one but the black frit printed on surface four, 104, is as shown in Figure 3A and the detailed view in Figure 3B. The pattern comprises tangent 1.5 mm diameter solid circles and is produced by screen printing.

**4. Example four:**

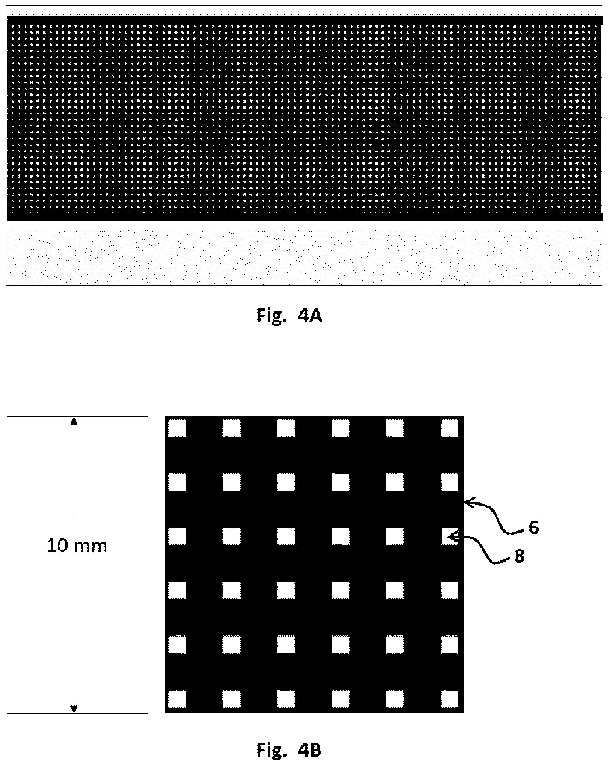

This example is identical to example one, excepting that the black frit printed on surface four, 104, is as shown in Figure 4A and the detailed view in Figure 4B. The void rectangles measure 0.5 mm on each side and are spaced apart by 1.5 mm. This pattern is produced by inkjet printing.

**5. Example five:**

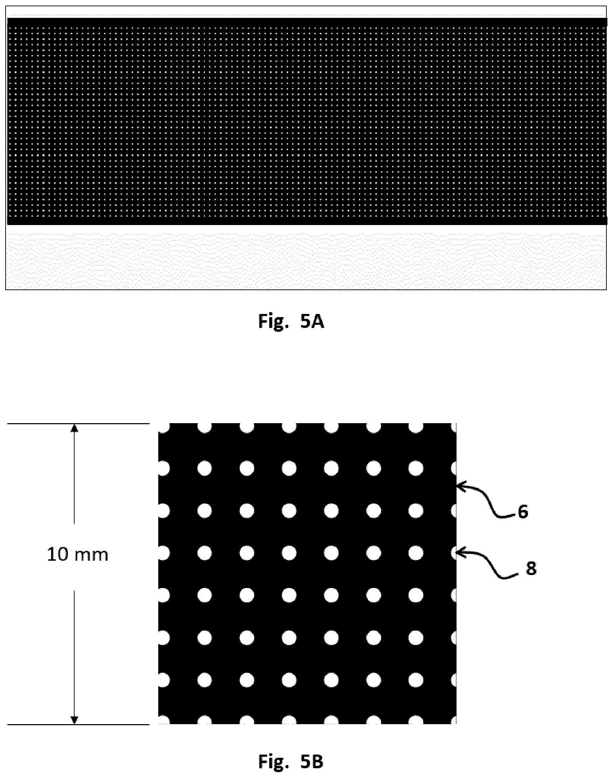

This example is identical to example one, excepting that the black frit printed on surface four, 104, is as shown in Figure 5A and the detailed view in Figure 5B. The pattern comprises 0.5 mm circular voids space 1.5 mm apart in the vertical and horizontal. The pattern was screen printed.

**6. Example six:**

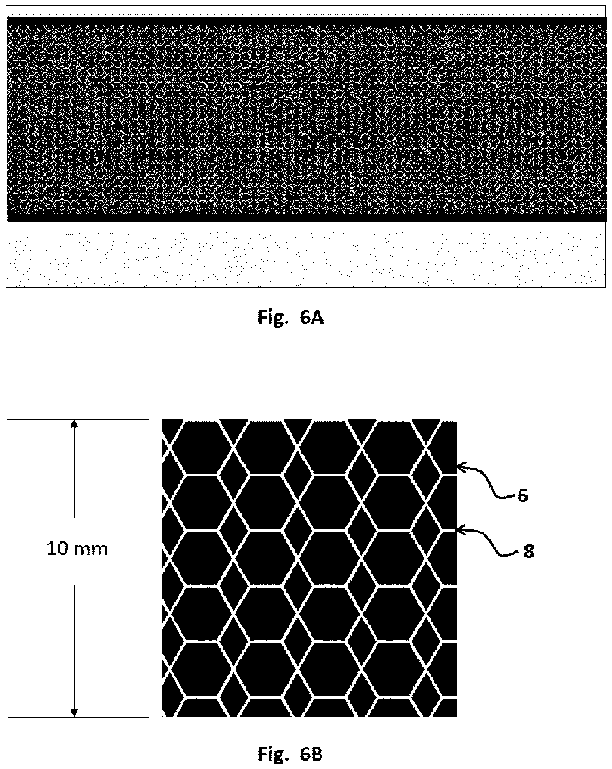

This example is identical to example one, excepting that the black frit printed on surface four, 104, is as shown in Figure 6A and the detailed view in Figure 6B.

**7. Example seven:**

This example is similar to identical one, excepting that a leather look black frit is ink jet printed on surface four, 104, as shown in Figure 7A. This pattern can only be printed with an inkjet. The voids are too small to be seen in the illustration. However, any area that is not opaque is produced by means of printing small dots and varying the size and spacing of the dots as is typical of many printed graphics.

**8. Example eight:**

This example is identical to example one, excepting that a carbon fiber look black frit is inkjet printed on surface four, 104, as shown in Figure 7B.

**9. Example nine:**

This example is a windshield comprising a solar coated outer glass layer 201 of 2.3 mm thick clear soda lime glass with a solid black obscuration 6 print along the periphery and in an area near the top center so as to hide the mounting bracket for a camera system. The inner glass layer 202 is 1.8 mm thick solar green soda-lime glass, the number four surface 104 of which is provided with the 90% coverage of Figure 6A and the detailed view Figure 6B. A trapezoidal shaped portion of the PVB extending to the edge of glass and measuring approximately 150 mm x 180 mm is cut out in the camera field of view. This cutout is located at the top edge of the glass and centered from left to right. During the assembly of the laminate, a temporary filler, the same thickness as the PVB, is placed in the cutout area. This is done so as to prevent breakage during the deair and autoclave process. The high pressure of the autoclave would compress the two glass layers together and break the glass otherwise. After lamination, the filler is removed, and the resulting void is filled with LOCA 40 which is then cured by UV light. The substitution of the PVB by the UV cured LOCA in the camera field of view region has the intend to improve optical distortion generated by the PVB. Additionally, most of the UV cured LOCAs have a light transmission above 99%, which is considerably higher than PVB interlayers with a light transmission of above 95%.

**10. Example ten:**

This example is similar to example one. In this example, the laminate is further enhanced by the addition of touch sensitive embedded LED lighting. LEDs, touch sensors and connecting wires are embedded in or attached to the first sheet of PVB 4 which bonds to number two surface, 102. The second sheet of PVB is replaced by LOCA 40.

It must be understood that the present disclosure is not limited to the examples and embodiments described and illustrated, as it will be obvious for an expert on the art, there are different variations and possible modifications that do not strive away from the disclosure's essence, which is only defined by the following claims.

**Claims**

1. A laminated glazing, comprising:

    a) at least two glass layers (201, 202, 203);
    b) at least one solid plastic interlayer (4) disposed in at least a portion between two adjacent glass layers of the at least two glass layers;
    c) at least one light curable LOCA layer (40) arranged in at least a portion between two adjacent glass layers of the at least two glass layers;
    so that each two adjacent glass layers remain bonded either by means of the at least one light curable LOCA layer, by means of the at least one solid plastic interlayer, or by means of the combined use of the at least one light curable LOCA layer and the at least one solid plastic interlayer;
    d) a first obscuration (6) provided over at least a portion of one of the outer or the inner glass layer (201, 202); and
    e) a second obscuration (6) provided over at least a portion of the other outer or inner glass layer (201, 202),

        i) wherein at least a portion of the first and second obscurations overlap,
        ii) wherein at least one of said obscurations is patterned such as to provide voids (8) spaced to allow for the transmission of incoming light (16) into the at least one light curable LOCA layer (40), and
        iii) wherein the at least one patterned obscuration is provided over those portions of glass layer bonded to another glass layer by means of the at least one light curable LOCA layer.

2. The laminated glazing of claim 1 further comprising at least one insert wherein said insert is bonded to the laminate by the at least one light curable LOCA layer.

3. The laminated glazing of claim 2, where the insert comprises at least one of the following: a VLT film selected from the group of PDLC film, SPD film, LC film, electrochromic film, or a lighting means such as LED, a touch sensor, a defroster for glazing heating and embedded antenna.

4. The laminated glazing of any one of the preceding claims, wherein the area of the voids in the at least one patterned obscuration is less than or equal to 50%, preferably less than or equal to 25%, or preferably less than or equal to 10%, or preferably less than or equal to 5%.

5. The laminated glazing of any one of the preceding claims, wherein center to center spacing of the voids in the at least one patterned obscuration is equal to or less than about four times the thickness of the glass layer provided with the patterned obscuration plus the LOCA.

6. The laminated glazing of any one of the preceding claims, wherein center to center spacing of the voids in at the least one patterned obscuration is equal to or less than about two times the thickness of the glass layer provided with the patterned obscuration plus the LOCA.

7. The laminated glazing of any one of the preceding claims, wherein center to center spacing of the voids in the at least one patterned obscuration is equal to or less than about the thickness of the glass layer provided with the patterned obscuration plus the LOCA.

8. The laminated glazing of any one of claims 2 to 7, wherein the insert is color matched to the obscurations.

9. The laminated glazing of any one of the preceding claims, wherein at least a portion of at least one of said obscurations is patterned to form at least one of the following: text, a logo, a trademark or a symbol.

10. A method for assembling a laminated glazing according to any of the preceding claims, comprising the following steps of:

　　a. providing a first obscuration (6) over at least a portion of a glass layer (201, 202);
　　b. disposing at least one solid plastic interlayer (4) over at least a portion of said glass layer provided with a first obscuration (6);
　　c. placing a non-adhesive interlayer on the surface of the at least one solid plastic interlayer, such as to form a pre-assembly;
　　d. laminating the pre-assembly with heat and/or pressure;
　　e. providing a second obscuration (6) over at least a portion of another glass layer (201, 202);
　　f. arranging at least one light curable LOCA layer (40) in at least a portion between the laminated pre-assembly and the glass layer provided with a second obscuration (6);

　　　　i. wherein at least a portion of the first and second obscurations overlap;
　　　　ii. wherein at least the second obscuration is patterned such as to provide voids (8) spaced to allow for the transmission of incoming light (16) into the at least one light curable LOCA layer (40); and
　　　　iii. wherein the at least one patterned obscuration is provided over those portions of glass layer bonded to another glass layer by means of the at least one light curable LOCA layer;

　　g. Curing by light the product resulting from the previous step, by injecting light on the glass surface that has the second obscuration.

11. The method of claim 10 wherein the non-adhesive interlayer is a sacrifice layer that is removed after the lamination step.

12. The method according to any one of claims 10 or 11, wherein about 90% or more of the light energy used to cure the LOCA is injected at or above the glass/air critical angle.

13. The method according to any one of claims 10 to 12, wherein during curing the glazing is moved relative to the light source or wherein the light source is moved relative to the glazing in order to cure the LOCA.

14. The method according to any one of claims 10 to 13 wherein during curing at least a portion of the daylight opening is covered by a mask that is semi-transparent at the frequency of the LOCA curing wavelength range.

15. A vehicle comprising a laminated glazing according to any one of claims 1 to 9 and a camera wherein the at least one light curable LOCA layer of the glazing is located in the field of view region of the camera and said LOCA layer is immediately adjacent to a portion of the patterned obscuration.

**Patentansprüche**

1. Laminierte Verglasung, umfassend:

　　a) mindestens zwei Glasschichten (201, 202, 203);
　　b) mindestens eine feste Kunststoffzwischenschicht (4), die in mindestens einem Abschnitt zwischen zwei benachbarten Glasschichten der mindestens zwei Glasschichten angeordnet ist;
　　c) mindestens eine lichthärtbare LOCA-Schicht (40), die in mindestens einem Abschnitt zwischen zwei benachbarten Glasschichten der mindestens zwei Glasschichten angeordnet ist; so dass jeweils zwei benachbarte Glasschichten entweder mittels der mindestens einen lichthärtbaren LOCA-Schicht, mittels der mindestens einen festen Kunststoffzwischenschicht oder mittels der kombinierten Verwendung der mindestens einen lichthärtbaren LOCA-Schicht und der mindestens einen festen Kunststoffzwischenschicht verbunden bleiben;
　　d) eine erste Verdunkelung (6), die über mindestens einem Abschnitt einer der äußeren oder der inneren Glasschicht (201, 202) bereitgestellt ist; und
　　e) eine zweite Verdunkelung (6), die über mindestens einem Abschnitt der anderen äußeren oder inneren Glasschicht (201, 202) bereitgestellt ist,

　　　　i) wobei sich mindestens ein Abschnitt der ersten und der zweiten Verdunkelung überlappt,
　　　　ii) wobei mindestens eine der Verdunkelungen so strukturiert ist, dass sie Hohlräume (8) bereitstellt, die beabstandet sind, um die Übertragung von einfallendem Licht (16) in die mindestens eine lichthärtbare LOCA-Schicht (40) zu ermöglichen, und
　　　　iii) wobei die mindestens eine strukturierte Verdunkelung über jenen Abschnitten der Glasschicht bereitgestellt ist, die mittels der mindestens einen lichthärtbaren LOCA-Schicht mit einer anderen Glasschicht verbunden sind.

2. Laminierte Verglasung gemäß Anspruch 1, ferner umfassend mindestens einen Einsatz, wobei der Einsatz durch die mindestens eine lichthärtbare LOCA-Schicht mit dem Laminat verbunden ist.

3. Laminierte Verglasung gemäß Anspruch 2, wobei der Einsatz mindestens eines der Folgenden umfasst: einen VLT-Film, ausgewählt aus der Gruppe von PDLC-Film, SPD-Film, LC-Film, elektrochromem Film, oder einem Leuchtmittel wie LED, einem Berührungssensor, einem Entfroster zum Verglasen von Heizung und eingebetteter Antenne.

4. Laminierte Verglasung gemäß einem der vorhergehenden Ansprüche, wobei die Fläche der Hohlräume in der mindestens einen strukturierten Verdunkelung weniger als oder gleich 50 %, vorzugsweise weniger als oder gleich 25 %, oder vorzugsweise weniger als oder gleich 10 %, oder vorzugsweise weniger als oder gleich 5 % beträgt.

5. Laminierte Verglasung gemäß einem der vorhergehenden Ansprüche, wobei der Mitte-zu-Mitte-Abstand der Hohlräume in der mindestens einen strukturierten Verdunkelung gleich oder weniger als etwa das Vierfache der Dicke der mit der strukturierten Verdunkelung versehenen Glasschicht plus der LOCA beträgt.

6. Laminierte Verglasung gemäß einem der vorhergehenden Ansprüche, wobei der Mitte-zu-Mitte-Abstand der Hohlräume in der mindestens einen strukturierten Verdunkelung gleich oder weniger als etwa das Zweifache der Dicke der mit der strukturierten Verdunkelung versehenen Glasschicht plus der LOCA beträgt.

7. Laminierte Verglasung gemäß einem der vorhergehenden Ansprüche, wobei der Mitte-zu-Mitte-Abstand der Hohlräume in der mindestens einen strukturierten Verdunkelung gleich oder weniger als etwa die Dicke der mit der strukturierten Verdunkelung versehenen Glasschicht plus der LOCA beträgt.

8. Laminierte Verglasung gemäß einem der Ansprüche 2 bis 7, wobei der Einsatz farblich an die Verdunkelungen angepasst ist.

9. Laminierte Verglasung gemäß einem der vorhergehenden Ansprüche, wobei mindestens ein Abschnitt mindestens einer der Verdunkelungen strukturiert ist, um mindestens eines der Folgenden zu bilden:

Text, ein Logo, eine Marke oder ein Symbol.

10. Verfahren zum Zusammenbauen einer laminierten Verglasung gemäß einem der vorhergehenden Ansprüche, umfassend die folgenden Schritte:

     a. Bereitstellen einer ersten Verdunkelung (6) über mindestens einem Abschnitt einer Glasschicht (201, 202);
     b. Anordnen mindestens einer festen Kunststoffzwischenschicht (4) über mindestens einem Abschnitt der Glasschicht, die mit einer ersten Verdunkelung (6) versehen ist;
     c. Platzieren einer nichtklebenden Zwischenschicht auf der Oberfläche der mindestens einen festen Kunststoffzwischenschicht, um eine Voranordnung zu bilden;
     d. Laminieren der Voranordnung mit Wärme und/oder Druck;
     e. Bereitstellen einer zweiten Verdunkelung (6) über mindestens einem Abschnitt einer anderen Glasschicht (201, 202);
     f. Anordnen mindestens einer lichthärtbaren LOCA-Schicht (40) in mindestens einem Abschnitt zwischen der laminierten Voranordnung und der Glasschicht, die mit einer zweiten Verdunkelung (6) versehen ist;

     i. wobei sich mindestens ein Abschnitt der ersten und der zweiten Verdunkelung überlappt;
     ii. wobei mindestens die zweite Verdunkelung so strukturiert ist, dass sie Hohlräume (8) bereitstellt, die beabstandet sind, um die Übertragung von einfallendem Licht (16) in die mindestens eine lichthärtbare LOCA-Schicht (40) zu ermöglichen; und
     iii. wobei die mindestens eine strukturierte Verdunkelung über jenen Abschnitten der Glasschicht bereitgestellt ist, die mittels der mindestens einen lichthärtbaren LOCA-Schicht mit einer anderen Glasschicht verbunden sind;

     g. Härten des Produkts, das aus dem vorherigen Schritt resultiert, durch Licht durch Injizieren von Licht auf die Glasoberfläche, die die zweite Verdunkelung aufweist.

11. Verfahren gemäß Anspruch 10, wobei die nichtklebende Zwischenschicht eine Opferschicht ist, die nach dem Laminierungsschritt entfernt wird.

12. Verfahren gemäß einem der Ansprüche 10 oder 11, wobei etwa 90 % oder mehr der Lichtenergie, die zum Härten der LOCA verwendet wird, bei oder über dem kritischen Glas-/Luftwinkel injiziert wird.

**13.** Verfahren gemäß einem der Ansprüche 10 bis 12, wobei die Verglasung während des Härtens relativ zu der Lichtquelle bewegt wird oder wobei die Lichtquelle relativ zu der Verglasung bewegt wird, um die LOCA zu härten.

**14.** Verfahren gemäß einem der Ansprüche 10 bis 13, wobei während des Härtens mindestens ein Abschnitt der Tageslichtöffnung durch eine Maske bedeckt ist, die bei der Frequenz des LOCA-Härtungswellenlängenbereichs semitransparent ist.

**15.** Fahrzeug, umfassend eine laminierte Verglasung gemäß einem der Ansprüche 1 bis 9 und eine Kamera, wobei die mindestens eine lichthärtbare LOCA-Schicht der Verglasung in dem Sichtfeldbereich der Kamera angeordnet ist und die LOCA-Schicht unmittelbar an einen Abschnitt der strukturierten Verdunkelung angrenzt.

**Revendications**

**1.** Vitrage laminé comprenant :

a. au moins deux couches de verre (201, 202, 203) ;
b. au moins une couche intermédiaire en plastique solide (4) disposée au moins en partie entre deux couches de verre adjacentes des au moins deux couches de verre ;
c. au moins une couche LOCA photopolymérisable (40) disposée au moins en partie entre deux couches de verre adjacentes des au moins deux couches de verre ;
de sorte que chacune des deux couches de verre adjacentes reste liée soit au moyen d'au moins une couche LOCA photopolymérisable, soit au moyen de l'au moins une couche intermédiaire en plastique solide, soit au moyen d'une utilisation combinée de l'au moins une couche LOCA photopolymérisable et de l'au moins une couche intermédiaire en plastique solide ;
d. un premier obscurcissement (6) sur au moins une partie de la couche de verre extérieure ou intérieure (201, 202) ; et
e. un second obscurcissement (6) sur au moins une partie de l'autre couche de verre extérieure ou intérieure (201, 202),

i. dans lequel au moins une partie du premier et du second obscurcissement se chevauchent,
ii. dans lequel au moins l'un desdits obscurcissements est structuré par des motifs de manière à présenter des vides (8) espacés pour permettre la transmission de la lumière entrante (16) dans au moins la couche LOCA photopolymérisable (40), et
iii. dans lequel l'au moins un motif d'obscurcissement est prévu sur les parties de la couche de verre liées à une autre couche de verre au moyen de l'au moins une couche LOCA photopolymérisable.

**2.** Le vitrage laminé selon la revendication 1, comprenant en outre au moins un insert, ledit insert étant lié au laminé par l'au moins une couche LOCA photopolymérisable.

**3.** Le vitrage laminé selon la revendication 2, où l'insert comprend au moins l'un des éléments suivants : un film VLT choisi dans le groupe formé par un film PDLC, un film SPD, un film LC, un film électrochrome, ou un moyen d'éclairage tel qu'une LED, un capteur tactile, un dégivreur pour le chauffage du vitrage et une antenne intégrée.

**4.** Le vitrage laminé selon l'une quelconque des revendications précédentes, dans lequel la surface des vides dans l'au moins un obscurcissement à motifs est inférieure ou égale à 50 %, de préférence inférieure ou égale à 25 %, ou de préférence inférieure ou égale à 10 %, ou de préférence inférieure ou égale à 5 %.

**5.** Le vitrage laminé selon l'une quelconque des revendications précédentes, dans lequel l'espacement centre à centre des vides dans l'au moins un obscurcissement à motifs est égal ou inférieur à environ quatre fois l'épaisseur de la couche de verre pourvue de l'obscurcissement à motifs plus le LOCA.

**6.** Le vitrage laminé selon l'une quelconque des revendications précédentes, dans lequel l'espacement centre à centre des vides dans au moins un obscurcissement à motifs est égal ou inférieur à environ deux fois l'épaisseur de la couche de verre pourvue de l'obscurcissement à motifs plus le LOCA.

**7.** Le vitrage laminé selon l'une quelconque des revendications précédentes, dans lequel l'espacement centre à centre des vides dans l'au moins un obscurcissement à motifs est égal ou inférieur à l'épaisseur de la couche de verre pourvue de l'obscurcissement à motifs plus le LOCA.

**8.** Le vitrage laminé selon l'une quelconque des revendications 2 à 7, dans lequel l'insert est de couleur assortie aux obscurcissements.

**9.** Le vitrage laminé selon l'une quelconque des revendications précédentes, dans lequel au moins une partie d'au moins l'un des obscurcissements est structurée pour former au moins l'un des éléments suivants : un texte, un logo, une marque ou un symbole.

10. Procédé d'assemblage d'un vitrage laminé selon l'une quelconque des revendications précédentes, comprenant les étapes suivantes :

a. fournir un premier obscurcissement (6) sur au moins une partie d'une couche de verre (201, 202) ;
b. disposer au moins une couche intermédiaire en plastique solide (4) sur au moins une partie de ladite couche de verre pourvue d'un premier obscurcissement (6) ;
c. placer une couche intermédiaire non adhésive sur la surface de l'au moins une couche intermédiaire en plastique solide, de manière à former un pré-assemblage ;
d. laminer le pré-assemblage à l'aide de la chaleur et/ou de la pression ;
e. fournir un second obscurcissement (6) sur au moins une partie d'une autre couche de verre (201, 202) ;
f. disposer au moins une couche LOCA photopolymérisable (40) dans au moins une partie située entre le pré-assemblage laminé et la couche de verre pourvue d'un second obscurcissement (6) ;

i. dans lequel au moins une partie des premier et second obscurcissements se chevauchent ;
ii. dans lequel au moins le second obscurcissement est structuré par des motifs de manière à présenter des vides (8) espacés de façon à permettre la transmission de la lumière entrante (16) dans au moins une couche LOCA photopolymérisable (40) ; et
iii. dans lequel au moins un motif d'obscurcissement est fourni sur les parties de la couche de verre liées à une autre couche de verre au moyen de l'au moins une couche LOCA photopolymérisable ;

g. durcir à la lumière le produit résultant de l'étape précédente, en injectant de la lumière sur la surface du verre qui présente le second obscurcissement.

11. Le procédé selon la revendication 10 dans lequel la couche intermédiaire non adhésive est une couche de sacrifice qui est enlevée après l'étape de laminage.

12. Le procédé selon l'une des revendications 10 ou 11, dans lequel environ 90 % ou plus de l'énergie lumineuse utilisée pour durcir le LOCA est injectée à l'angle critique verre/air ou au-dessus de celui-ci.

13. Le procédé selon l'une quelconque des revendications 10 à 12, dans lequel, pendant le durcissement, le vitrage est déplacé par rapport à la source de lumière ou dans lequel la source de lumière est déplacée par rapport au vitrage afin de durcir le LOCA.

14. Le procédé selon l'une quelconque des revendications 10 à 13, dans lequel, pendant le durcissement, au moins une partie de l'ouverture de la lumière du jour est couverte par un masque semi-transparent à la fréquence de la gamme de longueurs d'onde de durcissement LOCA.

15. Véhicule comprenant un vitrage laminé selon l'une quelconque des revendications 1 à 9 et une caméra dans laquelle au moins une couche LOCA photopolymérisable du vitrage est située dans le champ de vision de la caméra et ladite couche LOCA est immédiatement adjacente à une partie de l'obscurcissement à motifs.

Fig. 1A

Fig. 1B

**Fig. 2A**

**Fig. 2B**

**Fig. 3A**

10 mm

**Fig. 3B**

Fig. 4A

10 mm

Fig. 4B

Fig. 5A

Fig. 5B

Fig. 6A

10 mm

Fig. 6B

Fig. 7A

Fig. 7B

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020254991 A1
- WO 2022009180 A1

- US 2016075111 A1